# EUROPÄISCHE PATENTSCHRIFT

(11) **EP 1 907 249 B1**
(45) Veröffentlichungstag und Bekanntmachung des Hinweises auf die Patenterteilung: **05.01.2011**
(21) Anmeldenummer: 06776312.8
(22) Anmeldetag: 20.07.2006
(51) Int. Cl.: B60S 9/08

(54) **STÜTZWINDE**
SUPPORT JACK
BEQUILLE

(30) Priorität: 23.07.2005 DE 102005034554
(43) Veröffentlichungstag der Anmeldung: 09.04.2008
(73) Patentinhaber: JOST-Werke GmbH, 63263 Neu-Isenburg (DE)
(72) Erfinder: SEIDEL, Günter, 64560 Riedstadt (DE); MÜLLER, Gerald, 63179 Obertshausen (DE)
(74) Vertreter: Fuchs
(86) Internationale Anmeldenummer: PCT/EP2006/007146
(87) Internationale Veröffentlichungsnummer: WO 2007/012427

(56) Entgegenhaltungen:
- DE-A1- 10 017 322
- DE-A1- 19 836 635
- US-A1- 2003 089 898

## Beschreibung

Die Erfindung betrifft eine Stützwinde, insbesondere zum Abstützen von Aufliegern, mit einer in seiner Höhe teleskopartig verfahrbaren, eine Außen- und eine Innenhülse aufweisenden Abstützeinrichtung, mit einer Spindel und mit einer mit der Spindel zusammenwirkenden Spindelmutter, die an der Innenhülse befestigt ist. Die Erfindung betrifft auch ein Montageverfahren einer solchen Stützwinde.

Eine derartige Stützwinde wird beispielsweise in der EP 1 104 369 B1 beschrieben. Die Spindelmutter wird am oberen Ende der Innenhülse unmittelbar in die Innenhülse eingesetzt und in ihr befestigt. Hierbei liegt die Spindelmutter mit ihrem Auflagebund auf der Stirnfläche der Innenhülse auf und ist mit ihr unlösbar verbunden. Der Auflagebund der Spindelmutter ist an die Innenabmessungen der Außenhülse angepasst, so dass sie an der Innenseite der Außenhülse anliegt und auf diese Weise gegen Verdrehen gesichert ist.

Als Befestigung der Spindelmutter an der Innenhülse ist ein Verprägen oder Verstiften bekannt. Ein Austausch der Spindelmutter erfordert in allen Fällen auch den Austausch der Innenhülse.

Die US 2003/0089898 A1 beschreibt eine Stützwinde, dessen Innenhülse unlösbar mit einer Spindelmutteraufnahme verbunden ist. Diese Spindelmutteraufnahme wird auf die Innenhülse aufgesetzt und mittels Beibiegen von Laschen unlösbar mit der Innenhülse verbunden. Die Spindelmutteraufnahme besitzt einen Einführschlitz, in den die Spindelmutter seitlich eingeschoben werden kann. Durch angepasste Formgebung von Spindelmutter und Einführschlitz wird die Spindelmutter in der Spindelmutteraufnahme gegen Rotation und axiale Verschiebung in Längsrichtung der Stützwinde gesichert. Der Nachteil dieser Stützwinde besteht unter anderem darin, dass die Montage aufwendig ist, weil ein zusätzliches Bauteil, nämlich die Spindelmutteraufnahme, erforderlich ist.

Dokument DE-A-19836635 offenbart eine Stützwinde gemäß dem Oberbegriff des Anspruchs 1.

Aufgabe der Erfindung ist es, eine Stützwinde zu schaffen, deren Montage erleichtert wird und die den Austausch der Spindelmutter ermöglicht. Es ist auch Aufgabe, ein geeignetes Montageverfahren anzugeben.

Diese Aufgabe wird mit einer Stützwinde dadurch gelöst, dass die Spindelmutter erste Mittel und zweite Mittel zur formschlüssigen lösbaren Verbindung mit den Hülsen aufweist, wobei die ersten Mittel mit Mitteln der Innenhülse zur Fixierung der Spindelmutter in Richtung der Längsachse der Stützwinde zusammenwirken und wobei die zweiten Mittel mit Mitteln der Außenhülse zur Fixierung der Spindelmutter in Rotationsrichtung um die Längsachse zusammenwirken. Hierbei sind die Mittel der Innenhülse vorzugsweise so ausgebildet, dass sie eine Fixierung der Stützwinde in beide entgegengesetzte Richtungen der Längsachse der Stützwinde gewährleisten.

Dadurch, dass alle an der Verbindung der Spindelmutter mit den Hülsen beteiligten Mittel zum formschlüssigen Verbinden vorgesehen sind, kann auf zusätzliche Maßnahmen, wie z. B. Verprägen oder Verschweißen oder auf zusätzliche Befestigungsmittel, wie Befestigungsstifte oder dergleichen verzichtet werden. Die Spindelmutter wird lediglich mit den Hülsen zusammengefügt, so dass die vorgesehenen Mittel an der Spindelmutter und der Hülsen zur Fixierung zusammenwirken können.

Dadurch, dass die formschlüssige Verbindung lösbar ausgeführt ist, ist auch ein Austausch der Spindelmutter auf einfache Weise möglich.

Das-erfindungsgemäße Montageverfahren einer solchen Stützwinde ist dadurch gekennzeichnet, dass die Spindelmutter mit der Innenhülse mindestens mittels einer translatorischen und einer rotatorischen oder mindestens mittels zweier translatorischer Fügebewegungen lösbar verbunden wird.

Vorzugweise wirken die zweiten Mittel der Spindelmutter mit den Mitteln der Innenhülse und/oder die zweiten Mittel mit den Mitteln der Außenhülse zur Fixierung der Spindelmutter auch in Richtung senkrecht zur Längsachse der Stützwinde zusammen. Dadurch wird eine Fixierung der Stützwinde in alle Raumrichtungen einschließlich bezüglich einer Rotation erreicht.

Unter Fügebewegung wird ein Zusammensetzen der Komponenten ohne zusätzliche Befestigungsmittel verstanden.

Diese Fügebewegungen können mit geeigneten Montagemaschinen durchgeführt werden. Es ist aber auch möglich, die Montage der Spindelmutter von Hand durchzuführen.

Zwei Montageverfahren sind bevorzugt.

Gemäß einer ersten Ausführungsform wird die Spindelmutter in Richtung der Längsachse der Innenhülse in die Innenhülse eingeführt und anschließend wird die Spindelmutter um die Längsachse relativ zur Innenhülse gedreht, bis ihre Endposition erreicht ist.

Die zweite Ausführungsform sieht vor, dass die Spindelmutter in Richtung der Längsachse der Innenhülse in die Innenhülse eingeführt wird und dass die Spindelmutter senkrecht zur Längsachse versetzt wird, bis sie ihre Endposition erreicht hat.

Konstruktiv sind entsprechende Ausführungsformen für die Mittel von Spindelmutter und Hülsen vorgesehen.

Vorzugsweise umfassen die Mittel der Innenhülse mindestens zwei sich nach innen, vorzugsweise radial nach innen, erstreckende Nasen, die in entsprechende Öffnungen oder Vertiefungen der Spindelmutter eingreifen, die die ersten Mittel der Spindelmutter bilden.

Eine weitere Ausführungsform sieht vor, dass die ersten Mittel der Spindelmutter mindestens zwei sich nach außen, vorzugsweise radial nach außen, erstreckende Nasen umfassen, die in entsprechende Öffnungen oder Vertiefungen der Innenhülse eingreifen. Hierbei sind die Nasen vorzugsweise in die Öffnungen der Innenhülse steckbar. Die Öffnungen können geschlossen oder zur Stirnseite der Hülse hin offene Öffnungen sein.

Die Öffnungen können länglich und/oder L-förmig ausgeführt sein.

Zur Montage wird die Spindelmutter von oben in die Innenhülse eingesetzt. Hierbei wird die Spindelmutter verdreht eingesetzt, d. h. die Nasen weisen vorzugsweise in die Eckbereiche der Innenhülse. Wenn die Spindelmutter auf der Stirnfläche der Innenhülse aufliegt, wird die Spindelmutter gedreht, so dass die Nasen in die entsprechenden Öffnungen der Innenhülse eingreifen. Hierbei können die Öffnungen auch derart ausgebildet sein, dass sie einen Anschlag für die Endposition der Spindelmutter bilden, wodurch eine Festlegung der Spindelmutter senkrecht zur Längsachse der Stützwinde bewirkt wird.

Die Mittel der Innenhülse können auch mindestens einen zum Rand der Innenhülse offenen Schlitz aufweisen, in den die Nase/n der Spindelmutter einführbar ist/sind. Dieser Schlitz erstreckt sich vorzugsweise vom oberen Rand der Innenhülse nach unten und geht in einen horizontalen Schlitz über. Bei dieser Ausführungsform ist vorzugsweise eine Öffnung in einer benachbarten Wand der Innenhülse vorgesehen, in die eine weitere Nase der Spindelmutter eingreifen kann.

Die Spindelmutter wird hierbei von oben eingesetzt, wobei die Nase im vertikalen Schlitz zunächst nach unten verschoben wird und anschließend horizontal versetzt wird. Während des horizontalen Verschiebens greift mindestens eine weitere Nase in eine entsprechende Öffnung einer Wand der Innenhülse. Insgesamt erfolgt die Montage mindestens zweier translatorischer Fügebewegungen.

Vorzugsweise besitzt die Spindelmutter eine rechteckige Außenkontur, wobei an jeder Außenseite eine Nase angeordnet ist.

Wenn die Innenhülse Nasen und die Spindelmutter Öffnungen oder Vertiefungen aufweist, erfolgt die Montage in analoger Weise.

Vorzugsweise sind die Nasen außermittig angeordnet. Diese außermittige Anordnung hat den Vorteil, dass bei einer rotatorischen Montage nur eine geringfügige Drehbewegung der Spindelmutter relativ zur Innenhülse notwendig ist, um die Spindelmutter zu montieren.

Vorzugsweise umfassen die zweiten Mittel der Spindelmutter mindestens ein Anlageelement, das an der Innenseite der Außenhülse anliegt. Dieses Anlageelement schließt vorzugsweise bündig mit der Außenseite der Innenhülse ab, so dass die Verschiebbarkeit der Innenhülse in der Außenhülse gewährleistet bleibt und andererseits die Verdrehsicherung der Spindelmutter sichergestellt wird. Das Anlageelement liegt somit in gleicher Weise an der Innenseite der Außenhülse an, wie dies bei der Innenhülse der Fall ist. Es kann insbesondere bei der rechteckigen Ausgestaltung bei der Spindelmutter an jeder Seite ein solches Anlageelement vorgesehen sein. Außer einer Verdrehsicherung wird durch die Anlageelemente in Verbindung mit der Außenhülse eine Festlegung der Spindelmutter in Richtung senkrecht zur Längsachse der Stützwinde bewirkt.

Vorzugsweise ist der in der Regel ohnehin vorhandene Auflagebund der Spindel dieses Anlageelement. Der Auflagebund besitzt vorzugsweise eine Außenkontur bzw. Außenflächen, die an die Innenkontur der Außenhülse angepasst ist/sind.

Vorzugsweise weist der Auflagebund im Bereich über den Nasen jeweils eine Ausnehmung auf. Diese Ausführungsform hat fertigungstechnische Vorteile, weil bei einer gegossenen Spindelmutter auf diese Weise Hinterschnitte vermieden werden und daher auf Kerne oder komplizierte Formteilungen verzichtet werden kann.

Die Außenflächen der Spindelmutter sind vorzugsweise unterhalb und zwischen den Nasen gegenüber der Stirnfläche der Nasen zurückgesetzt.

Beispielhafte Ausführungsformen der Erfindung werden nachfolgend anhand der Zeichnungen näher erläutert.

Es zeigen:
- Fig. 1: einen Vertikalschnitt durch eine Stützwinde,
- Fig. 2: einen Horizontalschnitt gemäß der Linie E-E durch die in Figur 1 gezeigte Stützwinde,
- Fig. 3: eine perspektivische Darstellung einer Spindelmutter,
- Fig. 4: eine Seitenansicht der in Figur 3 dargestellten Spindelmutter,
- Fig. 5: eine Draufsicht auf die in der Figur 3 dargestellten Spindelmutter,
- Fig. 6: eine Unteransicht auf die in Figur 4 dargestellte Spindelmutter,
- Fig. 7: eine Seitenansicht einer Innenhülse,
- Fig. 8: eine Seitenansicht einer Spindelmutter und einer Innenhülse gemäß einer weiteren Ausführungsform, und
- Fig. 9: einen Vertikalschnitt durch eine Innenhülse und eine Seitenansicht einer Spindelmutter gemäß einer weiteren Ausführungsform.

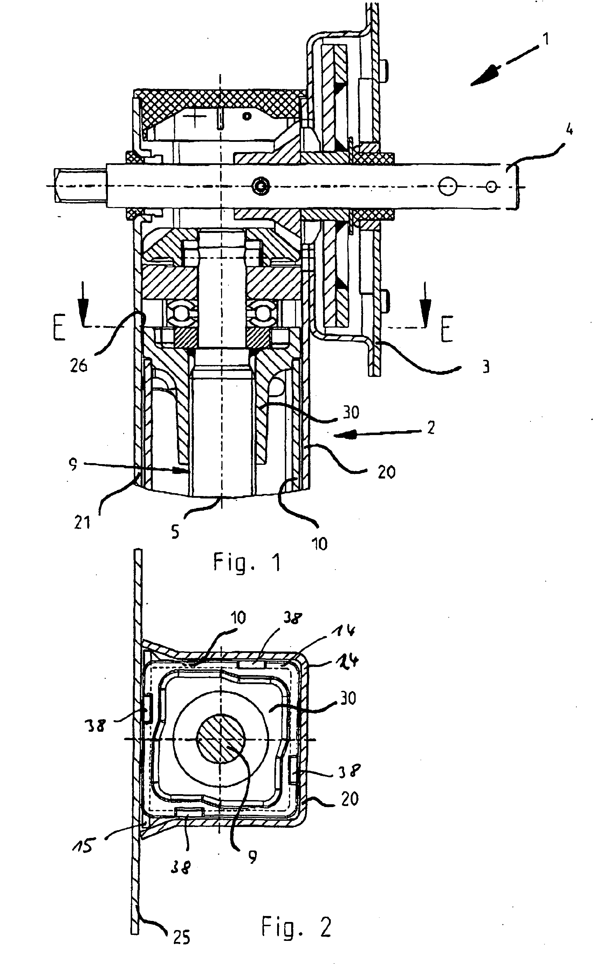

In der Figur 1 ist das Oberteil einer Stützwinde 1 im Vertikalschnitt dargestellt. Die Stützwinde 1 besitzt eine Abstützeinrichtung 2 mit einer Innenhülse 10 und einer Außenhülse 20, wobei die Innenhülse 10 nach unten teleskopierbar ist. Innenhülse und Außenhülse können aus einem Vierkantprofil bestehen. Hierzu ist in der Längsachse 5 der Stützwinde 1 eine Spindel 9 und eine Spindelmutter 30 vorgesehen, die sich auf der Innenhülse 10 abstützt. Des Weiteren ist ein Getriebe und ein Getriebegehäuse 3 vorgesehen, sowie eine Eingangswelle 4. Der Getriebeaufbau ist für die vorliegende Erfindung nicht von Bedeutung.

In der Figur 2 ist ein Schnitt durch die in Figur 1 gezeigte Stützwinde 1 längs der Linie E-E dargestellt. Es ist zu sehen, dass in dieser beispielhaften Ausführungsform sowohl die Innenhülse 10 als auch die Außenhülse 20 jeweils aus einem U-Profil 14,24 und einer Wandplatte 15,25 gefertigt sind. Die Außenhülse 20 ist mit ihrer Wandplatte 25 an einem Befestigungselement eines nicht näher dargestellten Fahrzeuges montiert. In der Innenhülse 10 ist die Spindelmutter 30 angeordnet, die im Zusammenhang mit den nachfolgenden Figuren im Einzelnen erläutert wird. Die Spindelmutter 30 liegt mit ihrem Auflagebund 37 auf der Stirnfläche 17 der Innenhülse auf. Die Außenkontur des Auflagebundes 37 entspricht der Innenkontur der Außenhülse 20, die die Spindelmutter 30 fixiert.

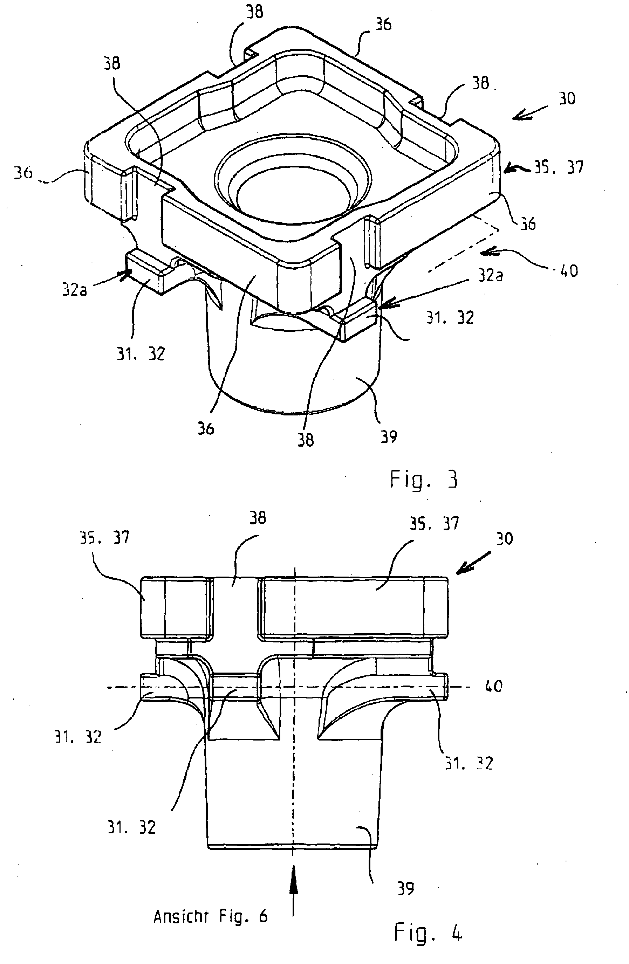

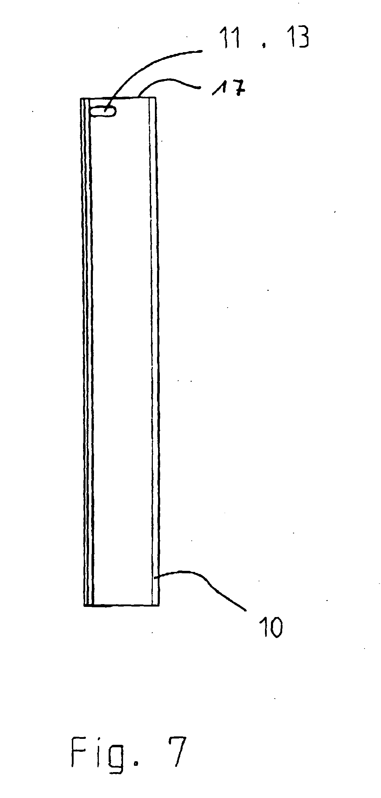

In der Figur 3 ist die Spindelmutter 30 perspektivisch dargestellt. Im unteren Bereich weist die Spindelmutter 30 einen zylindrischen Abschnitt 39 auf, an dem nach oben sich radial nach außen erstreckende Nasen 32 angeordnet sind, die die ersten Mittel 31 bilden. Wie in Figur 4 zu sehen ist, handelt es sich um rechteckig ausgebildete Vorsprünge, die an dem zylindrischen Abschnitt 39 angeformt sind. Die Nasen 32 wirken mit Öffnungen 13 in der Innenhülse 10 zusammen (siehe Figur 7).

Die Nasen 32 befinden sich in einer Ebene 40 unterhalb des Auflagebundes 37, der aus insgesamt vier, sich über die Ecken erstreckende Anlageelemente 36 gebildet wird, die die zweiten Mittel 35 darstellen. Der Auflagebund 37 liegt mit seiner Unterseite auf der Stirnfläche 17 der Innenhülse 10 auf, während die Anlageelemente 36 mit ihrer Umfangsfläche an der Innenseite 26 der Außenhülse 20 anliegen, die die Mittel 21 bildet.

Wie der Figur 4 zu entnehmen ist, stehen die Anlageelemente 36 gleich weit wie die Nasen 32 nach außen vor, die sämtlich in der Ebene 40 angeordnet sind. Zwischen dem Auflagebund 37 und der Nasen 32 ist die Spindelmutter 30 gegenüber den Stirnflächen 32a der Nasen 32 zurückversetzt ausgebildet.

Zwischen den Anlageelementen 36 sind Ausnehmungen 38 vorgesehen, die über den außermittig angeordneten Nasen 32 vorgesehen sind. Diese Ausgestaltung hat fertigungstechnische Gründe. Man könnte auch den Auflagebund 37 ohne derartige Ausnehmungen ausgestalten, so dass lediglich ein Anlageelement 36 vorhanden wäre, das mit dem Auflagebund 37 identisch wäre.

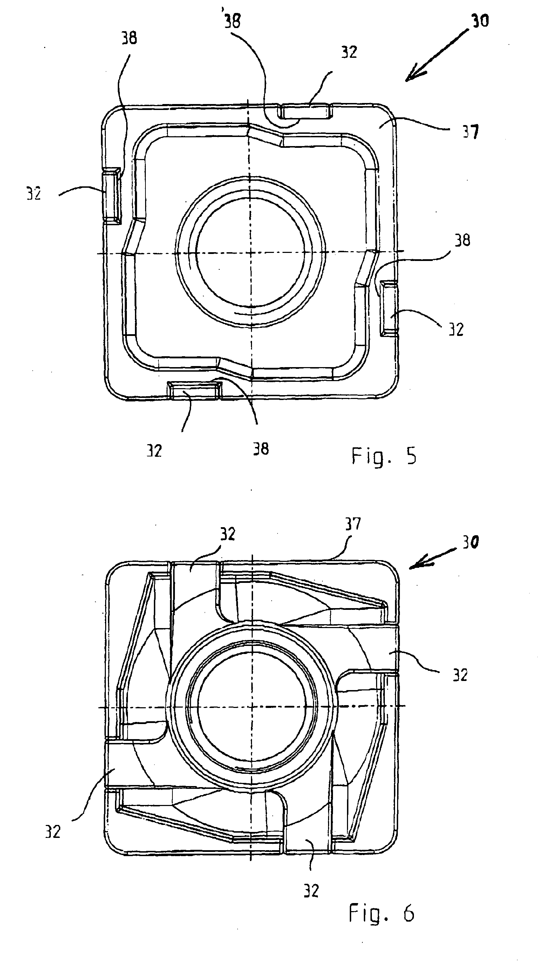

In der Figur 5 ist die Draufsicht auf die Spindelmutter 30 und in der Figur 6 eine Unteransicht der in Figur 4 gezeigten Spindelmutter zu sehen.

In der Figur 7 ist die Seitenansicht einer Innenhülse 10 zu sehen, die im oberen Bereich Mittel 11 aufweist. In der hier gezeigten Ausführungsform bestehen diese Mittel 11 aus in horizontaler Richtung länglichen Öffnungen 13, wobei in der Figur 7 lediglich eine Öffnung 13 zu sehen ist. In diese Öffnung 13 greift eine entsprechende Nase 32 der Spindelmutter 30 ein. Diese Ausführungsform ist für das Montageverfahren geeignet, bei dem die Spindelmutter 30 von oben eingesetzt und anschließend gedreht wird.

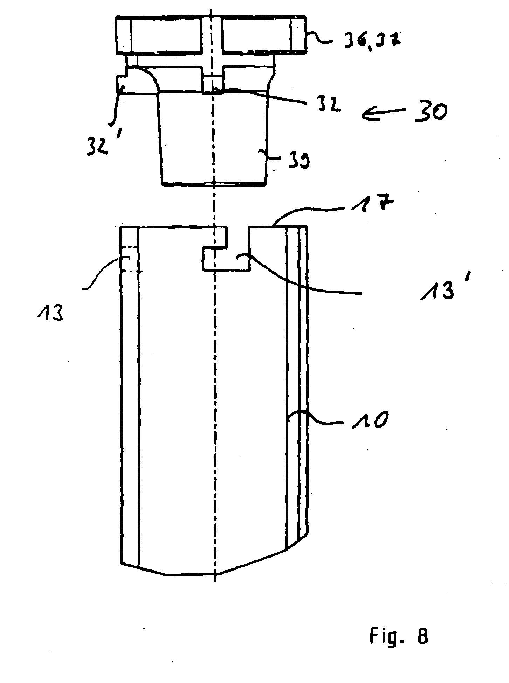

In der Figur 8 ist eine weitere Ausführungsform der Spindelmutter 30 und der Innenhülse 10 dargestellt. Die Spindelmutter 30 besitzt an drei Seiten Nasen 32, 32', wobei die rückwärtige Nase nicht sichtbar ist. Die vierte Seite weist keine Nase auf.

Die Innenhülse 10 weist an zwei gegenüberliegenden Seiten L-förmige Öffnungen 13' auf, die an der Stirnfläche 17 offen sind. Die Spindelmutter 30 wird von oben in die Innenhülse 10 eingesetzt, wobei die gegenüberliegenden Nasen 32 in den L-förmigen Öffnungen 13' zuerst nach unten geschoben und anschließend in horizontaler Richtung verschoben werden. Wenn die Endstellung erreicht wird, greift die Nase 32' in eine entsprechende Öffnung 13 in der linken Seitenwand der Innenhülse 10. In der Endstellung fluchtet die Außenkontur des Auflagebundes 37 mit der Außenkontur der Innenhülse 10.

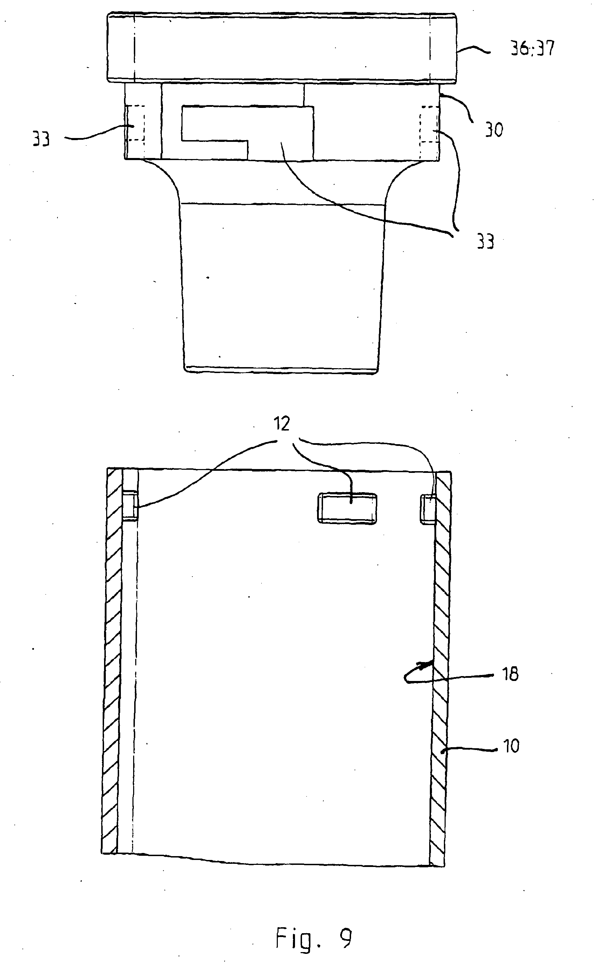

In der Figur 9 ist eine weitere Ausführungsform der Spindelmutter 30 und der Innenhülse 10 dargestellt. Im Unterschied zu den vorhergehenden Ausführungsformen besitzt die Innenhülse 10 an ihrer Innenfläche 18 Nasen 12, die nach innen vorstehen. Diese Nasen 12 wirken mit Öffnungen 33 der Spindelmutter 30 zusammen, die unterhalb des Auflagebundes 37 angeordnet sind. Hierbei handelt es sich um längliche Ausnehmungen oder Vertiefungen 33. Bei dieser Ausführungsform sind gegenüber den vorhergehenden Ausführungsformen die Nasen und Öffnungen bzw. Vertiefungen zwischen Innenhülse 10 und Spindelmutter 30 vertauscht. Der Montagevorgang kann in gleicher Weise erfolgen, wie dies im Zusammenhang mit der vorhergehenden Ausführungsform beschrieben wurde.

### Bezugszeichenliste

- 1: Stützwinde
- 2: Abstützeinrichtung
- 3: Getriebegehäuse
- 4: Eingangswelle
- 5: Längsachse der Stützwinde
- 9: Spindel

- 10: Innenhülse
- 11: Mittel der Innenhülse
- 12: Nase
- 13: Öffnung, Vertiefung
- 13': L-förmige Öffnung
- 14: U-profil
- 15: Wandplatte
- 17: Stirnfläche
- 18: Innenfläche

- 20: Außenhülse
- 21: Mittel der Außenhülse
- 24: U-Profil
- 25: Wandplatte
- 26: Innenseite der Außenhülse

- 30: Spindelmutter
- 31: erste Mittel
- 32: Nase
- 32': Nase
- 32a: Stirnfläche der Nase
- 33: Öffnung, Vertiefung
- 35: zweite Mittel
- 36: Anlageelement
- 37: Auflagebund
- 38: Ausnehmung

- 39: zylindrischer Abschnitt

- 40: Ebene

## Patentansprüche

1. Stützwinde, insbesondere zum Abstützen von Aufliegern, mit einer in seiner Höhe teleskopartig verfahrbaren, eine Außenhülse (20) und Innenhülse (10) aufweisenden Abstützvorrichtung (2), mit einer Spindel (9) und mit einer mit der Spindel (9) zusammenwirkenden Spindelmutter (30), die an der Innenhülse (10) befestigt ist, und wobei
die Spindelmutter (30) erste Mittel (31) und zweite Mittel (35) zur formschlüssigen lösbaren Verbindung mit den Hülsen (10, 20) aufweist, und wobei die zweiten Mittel (35) mit Mitteln (21) der Außenhülse (20) zur Fixierung der Spinde mutter(30) in Rotationsrichtung um die Längsachse (5) der Stützwinde (1) zusammenwirken, **dadurch gekennzeichnet,**
**dass**
die ersten Mittel (31) mit Mitteln (11) der Innenhülse (10) zur Fixierung der Spindelmutter (30) in beide entgegengesetzte Richtungen der Längsachse (5) der Stützwinde (1) zusammenwirken.

2. Stützwinde nach Anspruch 1, **dadurch gekennzeichnet, dass** die ersten Mittel (31) mit den Mitteln (11) der Innenhülse (10) und/oder die zweiten Mittel (35) mit Mitteln der Außenhülse (20) zur Fixierung der Spindelmutter (30) in Richtung senkrecht zur Längsachse (5) zusammenwirken.

3. Stützwinde nach Anspruch 1 oder 2, **dadurch gekennzeichnet, dass** die Mittel (11) der Innenhülse (10) mindestens zwei sich nach innen erstreckende Nasen (12) umfassen, die in entsprechende Öffnungen oder Vertiefungen (33) der Spindelmutter (30) eingreifen, die die ersten Mittel (31) der Spindelmutter (30) bilden.

4. Stützwinde nach einem der Ansprüche 1 oder 2, **dadurch gekennzeichnet, dass** die ersten Mittel (31) mindestens zwei sich nach außen erstreckende Nasen (32, 32') umfassen, die in entsprechende Öffnungen oder Vertiefungen (13, 13') der Innenhülse (10) eingreifen.

5. Stützwinde nach Anspruch 4, **dadurch gekennzeichnet, dass** die Nasen (32) in die Öffnungen (13) der Innenhülse (10) steckbar sind.

6. Stützwinde nach einem der Ansprüche 4 oder 5, **dadurch gekennzeichnet, dass** die Spindelmutter (30) eine rechteckige Außenkontur aufweist und an jeder Außenseite eine Nase (32) aufweist.

7. Stützwinde nach einem der Ansprüche 4 bis 6, **dadurch gekennzeichnet, dass** die Nasen (32, 32') außermittig angeordnet sind.

8. Stützwinde nach einem der Ansprüche 1 bis 7, **dadurch gekennzeichnet, dass** die zweiten Mittel (35) mindestens ein Anlageelement (36) umfassen, das an der Innenseite (26) der Außenhülse (20) anliegt.

9. Stützwinde nach Anspruch 8, **dadurch gekennzeichnet, dass** das Anlageelement (36) mindestens eine Außenfläche des Auflagebunds (37) der Spindelmutter (30) ist.

10. Stützwinde nach einem der Ansprüche 4 bis 9, **dadurch gekennzeichnet, dass** die Nasen (32, 32') in einer Ebene (40) beabstandet unterhalb des Auflagebundes (37) angeordnet sind.

11. Stützwinde nach einem der Ansprüche 1 bis 10, **dadurch gekennzeichnet, dass** über den Nasen (32, 32') der Auflagebund (37) jeweils eine Ausnehmung (38) aufweist.

12. Stützwinde nach einem der Ansprüche 1 bis 11, **dadurch gekennzeichnet, dass** die Außenfläche der Spindelmutter (30) unterhalb und zwischen den Nasen (32) gegenüber der Stirnfläche (32a) der Nasen (32, 32') zurückgesetzt ist.

13. Montageverfahren einer Stützwinde, wobei eine Spindelmutter mit einer Innenhülse verbunden wird und die Innenhülse mit der Spindelmutter in die Außenhülse eingeführt wird, **dadurch gekennzeichnet,**
**dass** die Spindelmutter mit der Innenhülse mindestens mittels einer translatorischen und einer rotatorischen oder mindestens mittels zweier translatorischer Fügebewegungen lösbar verbunden wird.

14. Montageverfahren nach Anspruch 13, **dadurch gekennzeichnet, dass** die Spindelmutter in Richtung der Längsachse der Innenhülse in die Innenhülse eingeführt wird und
dass die Spindelmutter um die Längsachse relativ zur Innenhülse gedreht wird, bis sie ihre Endposition erreicht hat.

15. Montageverfahren nach Anspruch 13, **dadurch gekennzeichnet, dass** die Spindelmutter in Richtung der Längsachse der Innenhülse in die Innenhülse eingeführt wird und
dass die Spindelmutter senkrecht zur Längsachse versetzt wird, bis sie ihre Endposition erreicht hat.

## Claims

1. Support jack, in particular for supporting semitrailers, having a support device (2) which can be moved in the manner of a telescope in terms of its height and which has an outer sleeve (20) and inner sleeve (10), having a spindle (9) and having a spindle nut (30) which co-operates with the spindle (9) and which is secured to the inner sleeve (10), and the spindle nut (30) having first means (31) and second means (35) for positive-locking releasable connection with respect to the sleeves (10, 20), and the second means (35) co-operating with means (21) of the outer sleeve (20) in order to fix the spindle nut (30) in a rotational direction about the longitudinal axis (5) of the support jack (1), **characterised in that** the first means (31) co-operate with means (11) of the inner sleeve (10) for fixing the spindle nut (30) in both opposite directions of the longitudinal axis (5) of the support jack (1).

2. Support jack according to claim 1, **characterised in that** the first means (31) co-operate with the means (11) of the inner sleeve (10) and/or the second means (35) co-operate with means of the outer sleeve (20) for fixing the spindle nut (30) in the direction perpendicular relative to the longitudinal axis (5).

3. Support jack according to claim 1 or claim 2, **characterised in that** the means (11) of the inner sleeve (10) comprise at least two inwardly extending projections (12) which engage in corresponding openings or recesses (33) of the spindle nut (30) which form the first means (31) of the spindle nut (30).

4. Support jack according to either claim 1 or claim 2, **characterised in that** the first means (31) comprise at least two outwardly protruding projections (32, 32') which engage in corresponding openings or recesses (13, 13') of the inner sleeve (10).

5. Support jack according to claim 4, **characterised in that** the projections (32) can be inserted into the openings (13) of the inner sleeve (10).

6. Support jack according to either claim 4 or claim 5, **characterised in that** the spindle nut (30) has a rectangular outer contour and has a projection (32) at each outer side.

7. Support jack according to any one of claims 4 to 6, **characterised in that** the projections (32, 32') are arranged in an eccentric manner.

8. Support jack according to any one of claims 1 to 7, **characterised in that** the second means (35) comprise at least one abutment element (36) which abuts the inner side (26) of the outer sleeve (20).

9. Support jack according to claim 8, **characterised in that** the abutment element (36) is at least one outer face of the support collar (37) of the spindle nut (30).

10. Support jack according to any one of claims 4 to 9, **characterised in that** the projections (32, 32') are arranged in a plane (40) with spacing below the support collar (37).

11. Support jack according to any one of claims 1 to 10, **characterised in that**, above each of the projections (32, 32'), the support collar (37) has a recess (38).

12. Support jack according to any one of claims 1 to 11, **characterised in that** the outer face of the spindle nut (30) is recessed below and between the projections (32) relative to the front end (32a) of the projections (32, 32').

13. Assembly method for a support jack, a spindle nut being connected to an inner sleeve and the inner sleeve being introduced with the spindle nut into the outer sleeve, **characterised in that** the spindle nut is releasably connected to the inner sleeve at least by means of a translational and a rotational movement or at least by means of two translational connection movements.

14. Assembly method according to claim 13, **characterised in that** the spindle nut is introduced into the inner sleeve in the direction of the longitudinal axis of the inner sleeve and **in that** the spindle nut is rotated about the longitudinal axis relative to the inner sleeve until it has reached its end position.

15. Assembly method according to claim 13, **characterised in that** the spindle nut is introduced into the inner sleeve in the direction of the longitudinal axis of the inner sleeve and **in that** the spindle nut is offset perpendicularly relative to the longitudinal axis until it has reached its end position.

## Revendications

1. Béquille notamment destinée à procurer un appui à des semi-remorques, comprenant un dispositif d'appui (2) mobile dans le sens de sa hauteur à la manière d'un télescope, muni d'une douille extérieure (20) et d'une douille intérieure (10) ; une broche (9) ; et un écrou (30) à broche, qui coopère avec ladite broche (9) et est fixé à ladite douille intérieure (10), sachant que ledit écrou (30) à broche comporte des premiers moyens (31) et des seconds moyens (35) conçus pour instaurer la liaison dissociable avec lesdites douilles (10, 20), par complémentarité de formes, et
que lesdits seconds moyens (35) coopèrent avec des moyens (21) de la douille extérieure (20), en vue du verrouillage à demeure dudit écrou (30) à broche dans une direction de rotation autour de l'axe longitudinal (5) de la béquille (1), **caractérisée par le fait que**
les premiers moyens (31) coopèrent avec des moyens (11) de la douille intérieure (10), en vue du verrouillage à demeure de l'écrou (30) à broche dans les deux directions opposées de l'axe longitudinal (5) de ladite béquille (1).

2. Béquille selon la revendication 1, **caractérisée par le fait que** les premiers moyens (31) coopèrent avec les moyens (11) de la douille intérieure (10), et/ou les seconds moyens (35) coopèrent avec des moyens de la douille extérieure (20), en vue du verrouillage à demeure de l'écrou (30) à broche dans une direction perpendiculaire à l'axe longitudinal (5).

3. Béquille selon la revendication 1 ou 2, **caractérisée par le fait que** les moyens (11) de la douille intérieure (10) englobent au moins deux mentonnets (12) s'étendant vers l'intérieur et pénétrant dans des orifices ou renfoncements correspondants (33) de l'écrou (30) à broche, qui constituent les premiers moyens (31) dudit écrou (30) à broche.

4. Béquille selon l'une des revendications 1 ou 2, **caractérisée par le fait que** les premiers moyens (31) englobent au moins deux mentonnets (32, 32') qui s'étendent vers l'extérieur, et pénètrent dans des orifices ou renfoncements correspondants (13, 13') de la douille intérieure (10).

5. Béquille selon la revendication 4, **caractérisée par le fait que** les mentonnets (32) peuvent être emboîtés dans les orifices (13) de la douille intérieure (10).

6. Béquille selon l'une des revendications 4 ou 5, **caractérisée par le fait que** l'écrou (30) à broche offre un profil extérieur rectangulaire, et présente un mentonnet (32) sur chaque face extérieure.

7. Béquille selon l'une des revendications 4 à 6, **caractérisée par le fait que** les mentonnets (32, 32') occupent des positions excentrées.

8. Béquille selon l'une des revendications 1 à 7, **caractérisée par le fait que** les seconds moyens (35) englobent au moins un élément de contact (36), en applique contre la face intérieure (26) de la douille extérieure (20).

9. Béquille selon la revendication 8, **caractérisée par le fait que** l'élément de contact (36) se présente au moins comme une surface extérieure du collet d'appui (37) de l'écrou (30) à broche.

10. Béquille selon l'une des revendications 4 à 9, **caractérisée par le fait que** les mentonnets (32, 32') sont situés dans un plan (40), à distance et au-dessous du collet d'appui (37).

11. Béquille selon l'une des revendications 1 à 10, **caractérisée par le fait que** le collet d'appui (37) est respectivement pourvu d'un évidement (38) au-dessus des mentonnets (32, 32').

12. Béquille selon l'une des revendications 1 à 11, **caractérisée par le fait que** la surface extérieure de l'écrou (30) à broche est en retrait, au-dessous des mentonnets (32) et entre ces derniers, vis-à-vis de la face extrême (32a) desdits mentonnets (32, 32').

13. Procédé de montage d'une béquille, dans lequel un écrou à broche est relié à une douille intérieure et ladite douille intérieure est insérée dans la douille extérieure, avec ledit écrou à broche, **caractérisé par le fait que** l'écrou à broche est relié amoviblement à la douille intérieure en effectuant au moins des mouvements translatoire et rotatoire d'assemblage, ou au moins deux mouvements translatoires d'assemblage.

14. Procédé de montage selon la revendication 13, **caractérisé par le fait que** l'écrou à broche est inséré dans la douille intérieure dans la direction de l'axe longitudinal de ladite douille intérieure ; et
que ledit écrou à broche est animé d'une rotation autour dudit axe longitudinal, vis-à-vis de ladite douille intérieure, jusqu'à ce qu'il ait atteint sa position définitive.

15. Procédé de montage selon la revendication 13, **caractérisé par le fait que** l'écrou à broche est inséré dans la douille intérieure dans la direction de l'axe longitudinal de ladite douille intérieure ; et
que ledit écrou à broche est décalé, perpendiculairement audit axe longitudinal, jusqu'à ce qu'il ait atteint sa position définitive.
